# DEMANDE DE BREVET EUROPEEN

(11) **EP 1 832 457 A2**
(43) Date de publication de la demande: **12.09.2007**
(21) Numéro de dépôt: 07290299.2
(22) Date de dépôt: 08.03.2007
(51) Int. Cl.: B60J 7/08

(54) **Dispositif de bâchage de conteneur**

(30) Priorité: 08.03.2006 FR 0602062
(71) Demandeur: Afhymat, 80700 Roye (FR)
(72) Inventeur: Koziarek, Franck, 60400 Noyon (FR)
(74) Mandataire: Kaspar, Jean-Georges

(57) **Abrégé**

L'invention concerne un dispositif de bâchage de conteneur comportant des moyens (1) aptes à être solidarisés à un conteneur, un camion ou une remorque porte-conteneur ou rendus solidaires d'un conteneur, un camion ou une remorque porte-conteneur.

Le dispositif comporte un bloc (11) d'enroulement sous précontrainte (33) d'une bâche (13), qui est déplaçable entre une position haute et une position basse, de manière à permettre le bâchage et le débâchage du conteneur par un opérateur sans risque d'accident, tout en ne dépassant pas latéralement du conteneur, camion ou remorque porte-conteneur.

## Description

L'invention est relative à un dispositif de bâchage de conteneur.

L'invention est particulièrement utile dans son application destinée au bâchage de conteneurs utilisés pour la collecte de déchets.

On sait que la collecte des déchets peut être réalisée à l'aide de conteneurs amovibles aptes à être chargés sur un camion porte-conteneur ou sur une remorque.

Ces conteneurs sont déchargés du camion ou de la remorque généralement à l'aide d'un bras hydraulique disposé à demeure sur le camion ou la remorque et déposés au sol en attendant leur remplissage. Après remplissage, les conteneurs sont à nouveau chargés sur un camion porte-conteneur ou une remorque et sont emmenés vers une destination prédéterminée.

Pour éviter les envols de déchets légers pendant le transport ou les chutes des déchets, il est impératif de bâcher ces conteneurs avant leur transport.

De manière habituelle, le bâchage d'un tel conteneur est effectué manuellement par le conducteur du camion, en déroulant une bâche sur le sommet du conteneur. Cette opération manuelle de bâchage est pénible, longue et fastidieuse, tout en présentant des risques d'accident pour l'opérateur.

On connaît également un autre procédé de bâchage de conteneur, dans lequel deux opérateurs situés de part et d'autre du camion déroulent une bâche au-dessus du conteneur, en supportant le rouleau de bâche au bout de perches ou moyens analogues.

On connaît également un procédé de bâchage du conteneur, dans lequel un mât vertical est disposé entre l'arrière de la cabine du camion et l'avant du conteneur et porte le rouleau de bâche. Le mât vertical est conformé de manière à élever en hauteur le rouleau de bâche, et le conducteur du camion déroule la bâche au-dessus du conteneur par traction à l'aide d'une corde ou autre lien souple. Cette opération de bâchage s'avère parfois difficile, dans le cas où des déchets de forme irrégulière dépassant du haut du conteneur s'accrochent dans la bâche en empêchant le bon déroulement de la bâche.

Le document EP 1 070 617 A1 décrit un dispositif de bâchage de conteneur comportant des moyens aptes à être solidarisés à un conteneur, un camion ou une remorque porte-conteneur ou rendus solidaires d'un conteneur, un camion ou une remorque porte-conteneur ; lesdits moyens étant déplaçables transversalement au conteneur, au camion ou à la remorque porte-conteneur et étant aptes à pivoter par rapport au conteneur, au camion ou à la remorque porte-conteneur pour fixer l'extrémité d'une bâche enroulée à une extrémité du conteneur, puis à pivoter à nouveau pour dérouler ladite bâche et recouvrir le conteneur pour le bâcher, ainsi qu'à effectuer les opérations inverses pour débâcher le conteneur.

Ce dispositif de bâchage de conteneur décrit dans le document EP 1 070 617 A1 est cependant complexe et présente l'inconvénient selon lequel le dispositif peut dépasser latéralement du camion ou de la remorque porte-conteneur lors de la circulation sur route, en cas de panne ou de mauvaise opération.

L'invention a pour but de remédier à ces inconvénients en proposant un nouveau dispositif de bâchage de conteneur, de fabrication simple et économique, permettant en toute sécurité à un opérateur de bâcher ou de débâcher un conteneur chargé sur un camion ou sur une remorque porte-conteneur.

Un avantage de l'invention est que le dispositif permet la circulation du camion ou de la remorque porte-conteneur sur route, en raison du fait que le dispositif ne peut pas dépasser latéralement du camion ou de la remorque porte-conteneur lors de la circulation sur route.

L'invention a pour objet un dispositif de bâchage de conteneur comportant des moyens aptes à être solidarisés à un conteneur, un camion ou une remorque porte-conteneur ou rendus solidaires d'un conteneur, un camion ou une remorque porte conteneur caractérisé par le fait que le dispositif comporte un bloc d'enroulement sous précontrainte d'une bâche, qui est déplaçable entre une position haute et une position basse, de manière à permettre le bâchage et le débâchage du conteneur par un opérateur sans risque d'accident, tout en ne dépassant pas latéralement du conteneur, camion ou remorque porte-conteneur.

Selon d'autres caractéristiques alternatives de l'invention :
- le déplacement entre la position haute et la position basse du dispositif est effectué par des actionneurs montés tête-bêche.
- le bloc d'enroulement contient des moyens élastiques précontraints élastiquement dans le sens d'enroulement de la bâche
- lesdits moyens élastiques comportent au moins un ressort spiral.
- la bâche du dispositif est repliable vers une position compacte d'enroulement et dépliable vers une position déployée de bâchage.
- la bâche du dispositif comporte deux rabats destinés à être appliqués et fixés sur les côtés d'un conteneur.
- la bâche présente un lien souple et élastique monté en boucle et ajustable entre une conformation ouverte autorisant le déploiement de la bâche et une conformation resserrée autorisant l'enroulement de la bâche.
- la bâche du dispositif est essentiellement constituée par un filet et présente des renforts extérieurs.
- la bâche du dispositif comporte un tube de butée et de renfort à son extrémité arrière.
- la boucle du lien souple est ajustable en longueur par déplacement de ses extrémités le long d'une sangle de traction.

L'invention sera mieux comprise grâce à la description qui va suivre donnée à titre d'exemple non limitatif en référence aux dessins annexés dans lesquels :
La figure 1 représente schématiquement une vue en perspective d'un dispositif selon l'invention rétracté en position basse.
La figure 2 représente schématiquement une vue en perspective d'un dispositif selon l'invention développé en position haute.
La figure 3 représente schématiquement une vue à plat d'une bâche de dispositif selon l'invention en position déployée.
La figure 4 représente schématiquement une vue à plat d'une bâche de dispositif selon l'invention en position repliée.
La figure 5 représente schématiquement une vue partielle en perspective d'un enrouleur de dispositif selon l'invention.

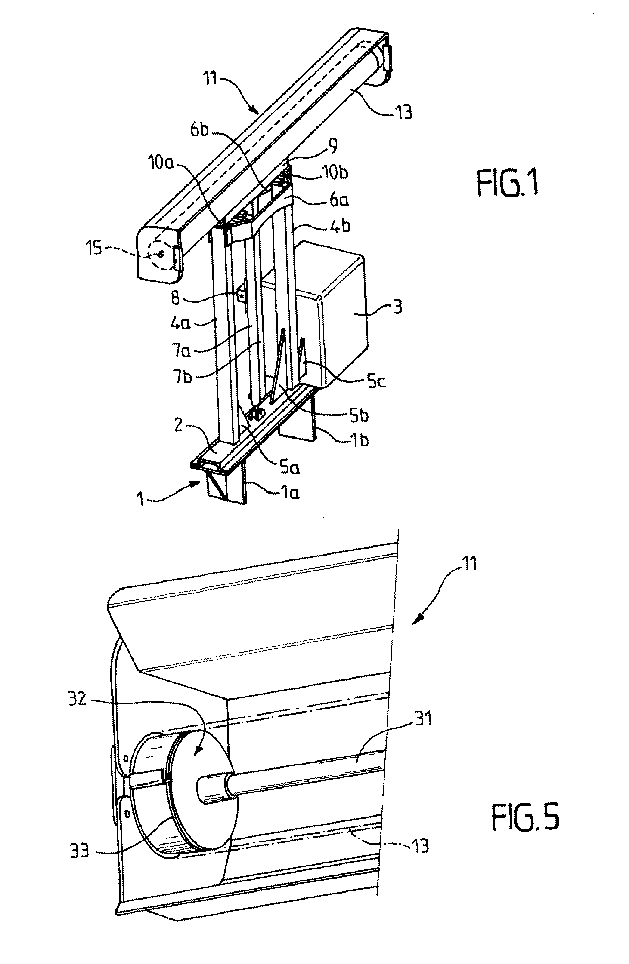

En référence aux figures 1 à 5, les éléments identiques ou fonctionnellement équivalents sont repérés par des chiffres de référence identiques.

Sur la figure 1, un dispositif selon l'invention comporte une partie 1 inférieure formant socle et présentant deux équerres 1 a, 1 b de montage sur les longerons d'un châssis de camion, de remorque ou d'autre support.

La partie inférieure 1 porte un socle 2 supportant une armoire 3 de commande du déplacement des actionneurs du dispositif et deux colonnes 4a, 4b de guidage. Des goussets de renfort 5a, 5b, 5c sont avantageusement prévus pour rigidifier l'assemblage de l'armoire 3 et des colonnes 4a, 4b au socle 2.

Les colonnes 4a, 4b sont reliées en partie haute par des traverses 6a, 6b formant butées de déplacement d'un ensemble supérieur coulissant, dont le déplacement est commandé par une paire d'actionneurs 7a, 7b montés tête-bêche.

Les actionneurs 7a, 7b sont de préférence des vérins hydrauliques à double effet alimentés par un bloc hydraulique répartiteur 8, pour assurer leur rétraction simultanée et leur extension simultanée. Les corps des vérins hydrauliques 7a, 7b sont solidarisés l'un à l'autre, de manière que leur course totale corresponde à la somme des courses des deux vérins 7a et 7b.

L'ensemble supérieur coulissant comporte une traverse 9 reliant deux tubes 10a, 10b coulissant dans les colonnes 4a, 4b et comporte un bloc 11 d'enroulement de bâche.

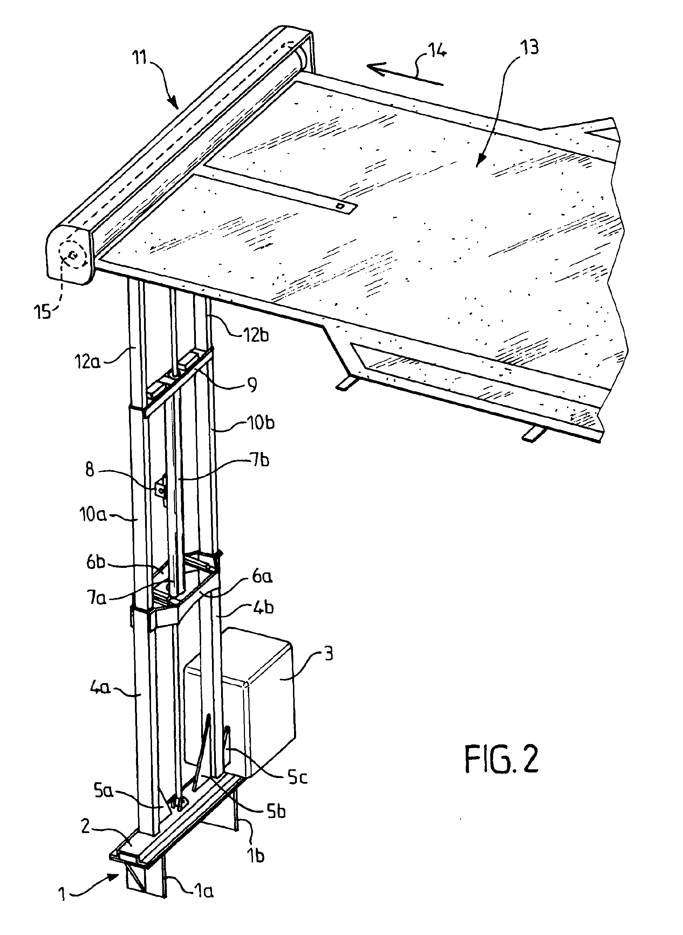

Sur la figure 2, le dispositif selon l'invention est développé en position haute, du fait de l'allongement simultané des vérins 7a et 7b.

Les tubes 10a, 10b reliés par la traverse 9 contiennent deux autre tubes 12a et 12b portant le bloc 11 d'enroulement de bâche soumis à la poussée du vérin 7b.

Du fait du coulissement successif des tubes 12a, 12b dans les tubes 10a, 10b et des tubes 10a, 10b dans les colonnes 4a, 4b, la hauteur développée est d'environ trois fois la longueur du corps d'un vérin 7a ou 7b.

Une bâche 13 essentiellement constituée par un filet de retenue incorporant un cadre et des pièces résistantes de renfort est en position déroulée, soumise à une traction dans le sens de la flèche 14 d'enroulement sur un rouleau 15 précontraint dans le sens d'enroulement par un moyen élastique de rappel.

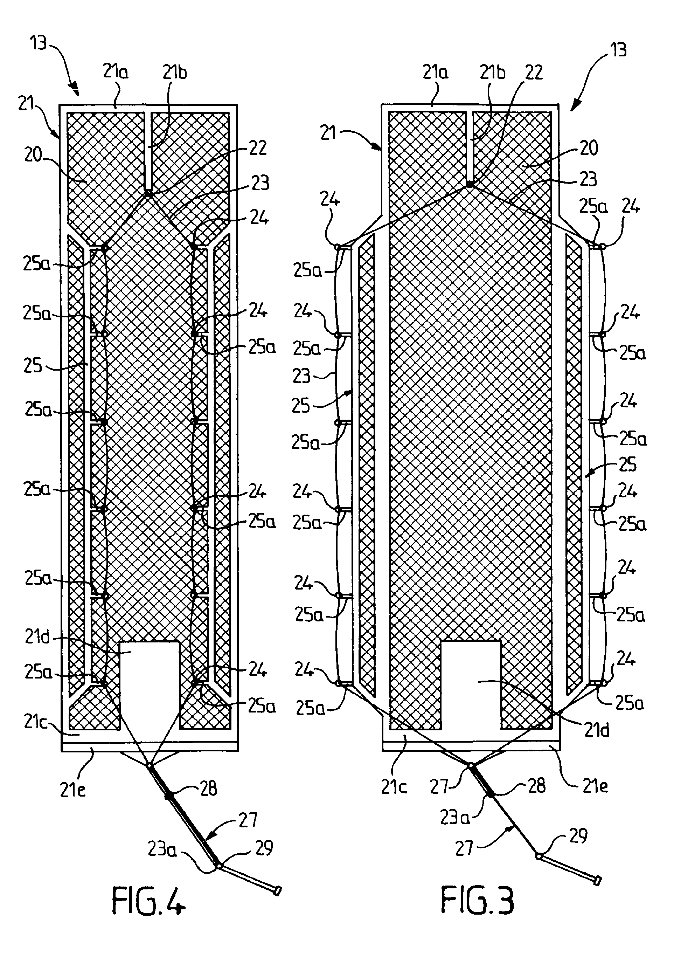

Sur la figure 3, une bâche 13 de dispositif selon l'invention comporte une partie centrale constituée par un filet 20 entouré par un cadre 21 rectangulaire en toile résistante avec une extrémité avant 21 a destinée à être fixée au rouleau de rappel, une bande longitudinale 21 b portant à son extrémité un oeillet 22, une extrémité arrière 21 c avec une bande centrale 21 d de renfort et un tube 21 e de renfort et de butée.

Un lien élastique 23 est monté en boucle à partir de l'oeillet 22 et à travers des anneaux 24 montés extérieurement à des rabats 25 bordant la partie centrale de la bâche 13, par exemple aux extrémités de bandelettes 25a fixées aux bords extérieurs renforcés des rabats 25.

Les deux extrémités du lien élastique 23 traversent un oeillet 26 disposé à l'extrémité d'un triangle de traction portant une sangle 27 munie d'un premier anneau 28 et d'un deuxième anneau 29.

Les anneaux 28 ou 29 sont destinés à la fixation d'un mousqueton 23a réunissant les deux extrémités du lien élastique 23.

Sur la figure 3, le mousqueton 23a est fixé à l'anneau 28 et le lien élastique 23 est dans une conformation ouverte autorisant le déploiement des rabats 25 de part et d'autre de la partie centrale de la bâche 13.

Sur la figure 4, le mousqueton 23 est dans une conformation resserrée provoquant le repliement des rabats 25 sur la partie centrale de la bâche 13, par traction sur les bandelettes 25a.

Le repliement des rabats 25 sur la partie centrale de la bâche 13 et leur maintien en position repliée par le lien élastique 23 permettent de maintenir le contour de la bâche 13 sous forme rectangulaire lors de son enroulement.

Le lien élastique 23 permet de maintenir la bâche en position repliée dans le gabarit routier de 2,55 mètres.

Sur la figure 5, le bloc 11 d'enroulement comporte un coffre 30 ouvert vers l'arrière, dans lequel est monté un arbre 31 solidaire de deux bobines 32 d'extrémité portant chacune un ressort spiral 33 précontraint dans le sens d'enroulement.

La précontrainte de chaque ressort spiral 33 est réglable de l'extérieur par rotation d'un flasque extérieur, après montage de la bâche 13 dont l'enroulement est limité par le tube 21 e d'extrémité.

Pour effectuer le bâchage d'un conteneur, chargé sur un camion équipé d'un dispositif selon l'invention, un opérateur déclenche le développement en position haute du dispositif par appui sur un bouton de "montée" de l'armoire de commande 3.

Après extension de la paire de vérins 7a, 7b, l'opérateur déroule la sangle 27 de traction jusqu'à l'arrière du conteneur pour la positionner à l'arrière et au milieu du conteneur.

L'opérateur tire ensuite sur la sangle 27 pour dérouler la bâche 13, en exerçant une traction à l'encontre des ressorts spiraux 33.

Le déroulement de la bâche 13 s'effectue en position repliée décrite en référence à la figure 4.

Après déroulement de la bâche 13 en position repliée, l'opérateur fixe la sangle 27 centralement à l'arrière du conteneur.

Après avoir ainsi fixé la bâche 13 en position repliée sur le conteneur, l'opérateur déclenche la rétraction du dispositif en position basse pour appliquer la bâche sur le dessus du conteneur, et ainsi la mettre en tension.

L'opérateur peut ensuite détendre le lien souple 23 en déplaçant le mousqueton 23a de l'anneau distal 29 à l'anneau proximal 28.

Le déplacement permet de libérer les rabats 25 et autorise leur rabattement et leur fixation sur les côtés du conteneur par accrochage du lien souple 23 sur les crochets latéraux du conteneur, de manière connue en soi.

Après avoir bâché le conteneur, l'opérateur peut en effectuer le transport.

Pour effectuer le débâchage d'un conteneur bâché chargé sur un camion ou une remorque équipée d'un dispositif selon l'invention, l'opérateur décroche le lien élastique 23 pour le libérer des crochets latéraux du conteneur et ainsi libérer les rabats latéraux 25 de la bâche 13.

L'opérateur déplace ensuite le mousqueton 23a de l'anneau proximal 28 à l'anneau distal 29, pour resserrer le lien souple 23 et provoquer le relevage des rabats 25 en position repliée sur la partie centrale de la bâche 13.

L'opérateur déclenche ensuite le développement en position haute du dispositif par appui sur un bouton de "montée" de l'armoire de commande 3.

Après extension de la paire de vérins 7a, 7b, l'opérateur détache la sangle 27 de l'arrière du conteneur, en l'accompagnant dans son mouvement vers l'avant, pour autoriser l'enroulement de la bâche 13 sous l'action des ressorts spiraux 33 de précontrainte.

Après enroulement de la bâche 13 jusqu'à venue en butée du tube 11 e sur le rebord du coffre 30, l'opérateur déclenche la rétraction du dispositif en position basse et attache les sangles et liens au dispositif, pour dégager l'espace de travail nécessaire au chargement du conteneur ou à sa dépose.

L'invention permet ainsi à un seul opérateur d'effectuer en toute sécurité le bâchage et le débâchage d'un conteneur, en évitant toute escalade ou toute intervention en hauteur susceptible d'entraîner un accident.

En outre, selon une variante non représentée, la sécurité du dispositif selon l'invention est améliorée par l'utilisation d'un avertisseur sonore ou lumineux du développement en position haute, afin d'empêcher la circulation du camion ou de la remorque dans cette conformation et d'éviter ainsi un accident par choc contre des ponts ou des obstacles en hauteur sous lesquels le camion ou la remorque est susceptible de passer.

## Revendications

1. Dispositif de bâchage de conteneur comportant des moyens (1) aptes à être solidarisés à un conteneur, un camion ou une remorque porte-conteneur ou rendus solidaires d'un conteneur, un camion ou une remorque porte-conteneur, **caractérisé par le fait que** le dispositif comporte un bloc (11) d'enroulement sous précontrainte (33) d'une bâche (13), qui est déplaçable entre une position haute et une position basse, de manière à permettre le bâchage et le débâchage du conteneur par un opérateur sans risque d'accident, tout en ne dépassant pas latéralement du conteneur, camion ou remorque porte-conteneur.

2. Dispositif selon la revendication 1, **caractérisé par le fait que** le déplacement entre la position haute et la position basse du dispositif est effectué par des actionneurs (7a, 7b) montés tête-bêche.

3. Dispositif selon la revendication 1 ou la revendication 2, **caractérisé par le fait que** le bloc (11) d'enroulement contient des moyens élastiques (33) précontraints élastiquement dans le sens d'enroulement de la bâche (13).

4. Dispositif selon la revendication 3, **caractérisé par le fait que** lesdits moyens élastiques (33) comportent au moins un ressort spiral (33).

5. Dispositif selon l'une quelconque des revendications précédentes, **caractérisé par le fait que** la bâche (13) du dispositif est repliable vers une position compacte d'enroulement et dépliable vers une position déployée de bâchage.

6. Dispositif selon la revendication 5, **caractérisé par le fait que** la bâche (13) du dispositif comporte deux rabats (25) destinés à être appliqués et fixés sur les côtés d'un conteneur.

7. Dispositif selon la revendication 4 ou la revendication 5, **caractérisé par le fait que** la bâche (13) présente un lien souple et élastique (23) monté en boucle et ajustable entre une conformation ouverte autorisant le déploiement de la bâche (13) et une conformation resserrée autorisant l'enroulement de la bâche.

8. Dispositif selon l'une quelconque des revendications précédentes, **caractérisé par le fait que** la bâche (13) du dispositif est essentiellement constituée par un filet et présente des renforts (21) extérieurs.

9. Dispositif selon la revendication 8, **caractérisé par le fait que** la bâche (13) du dispositif comporte un tube (21e) de butée et de renfort à son extrémité arrière (21 c).

10. Dispositif selon la revendication 7, **caractérisé par le fait que** la boucle du lien souple (23) est ajustable en longueur par déplacement de ses extrémités le long d'une sangle (27) de traction.
